# EUROPÄISCHE PATENTSCHRIFT

(11) **EP 1 371 714 B1**
(45) Veröffentlichungstag und Bekanntmachung des Hinweises auf die Patenterteilung: **04.10.2006**
(21) Anmeldenummer: 03090175.5
(22) Anmeldetag: 06.06.2003
(51) Int. Cl.: C10J 3/06, C10J 3/16, C10J 3/26, C10J 3/66, C10J 3/74

(54) **Verfahren und Vorrichtung zur Erzeugung eines Brenngases aus Biomassen**
Process and apparatus for producing a fuel gas from biomass
Procédé et appareil de production de gaz combustible à partir de biomasse

(30) Priorität: 15.06.2002 DE 10226862
(43) Veröffentlichungstag der Anmeldung: 17.12.2003
(73) Patentinhaber: GNS - Gesellschaft für Nachhaltige Stoffnutzung mbH, 06120 Halle (DE)
(72) Erfinder: Spindler, Herbert, 06120 Halle (DE); Bauermeister, Ute, 04205 Leipzig (DE)
(74) Vertreter: Wablat, Wolfgang

(56) Entgegenhaltungen:
- EP-A- 0 924 288
- EP-A- 1 167 492
- DE-A- 2 852 710
- DE-A- 10 030 778
- DE-A- 19 608 826
- DE-U- 20 120 189
- US-A- 3 920 417

## Beschreibung

Die Erfindung betrifft ein Verfahren und eine Vorrichtung zur Erzeugung eines Brenngases aus Biomassen, insbesondere Holz, in einem Festbettreaktor mit Wasserdampf und Luft als Vergasungsmittel unter Einsatz von anorganischen Mischkatalysatoren und unter Normaldruck, mit dem Ziel, ein Brenngas mit einer solchen Zusammensetzung zu erzeugen, dass es motorfähig ist, also praktisch keine motorschädigenden Bestandteile (Teere, Stäube, Schadmetalle) enthält, einen hohen Heizwert und eine hohe Klopffestigkeit besitzt und sein motorischer Einsatz nicht zu Abgasen mit Inhaltsstoffen in gefahrdrohender Menge führt.

Bekannt ist ein katalytisch-partiellallothermes Verfahren, wie es in der Europäischen Patentanmeldung EP 1 167 492 A2 beschrieben ist. Mit dieser Erfindung ist bereits die Herstellung eines motorfähigen teerarmen Brenngases aus Biomassen gelungen, dessen Heizwert weit über dem nach dem Stand der Technik mit Luft als Vergasungsmittel in einem einstufigen Gleichstrom-Festbettvergaser erreichten liegt, mit dem bisher nur Schwachgase (die Heizwertgrenze eines Schwachgases wird üblicherweise mit 8,5 MJ/Nm³ angegeben) erzeugt werden konnten.

Dennoch handelt es sich immer noch nur um ein Mittelgas mit einem 10 bis 12 MJ/Nm³ nicht überschreitenden unteren Heizwert.

Durch seine Zusammensetzung (hoher, bei 20 bis 30 Vol.-% liegender Anteil an Wasserstoff) ist seine Klopffestigkeit gering.

Ziel der Erfindung ist es, ein heizwertreiches Brenngas mit verbesserten motorischen Eigenschaften, insbesondere einem hohen Anteil an einfachen Kohlenwasserstoffen, auf effektive Weise zu erzeugen.

Als Aufgabe resultiert daraus, insbesondere durch Erhöhung des Anteils an einfachen Kohlenwasserstoffen im Brenngas dessen motorische Eigenschaften zu verbessern und gleichzeitig den Heizwert weiter zu erhöhen.

Erfindungsgemäß wird das bei einem Verfahren zur Erzeugung eines Brenngases aus Biomassen, insbesondere aus Holz, in einem Festbettvergasungsreaktor mit Wasserdampf und Luft als Vergasungsmittel unter Einsatz von anorganischen Mischkatalysatoren, wobei die so dotierte Biomasse erhitzt, getrocknet, mit Heißdampf und heißer Luft aufgeheizt, vergast und nach teilweiser Abkühlung der Rohgasstrom abgenommen und zum motorfähigen Brenngas gereinigt wird, dadurch erreicht, dass
- die Biomasse sukzessive mit multifunktionalen Mischkatalysatoren dotiert und nach Eingabe in den oberen Teil des Reaktors (Zone a) zunächst mit Heißdampf auf 100 bis 200 °C aufgeheizt, entlüftet und getrocknet wird,
- die Biomasse durch Eindüsen von Heißdampf in den oberen Teil des darunter gelegenen Reaktors (Zone b) inert auf 300 bis höchstens 400 °C aufgeheizt wird,
- die verkokte Biomasse im mittleren Teil des Reaktors (Zone c) in mindestens zwei Teilmengen so mit Heißluft beaufschlagt wird, dass die Luftmenge insgesamt 0,7 kg Luft pro kg Biomasse, auf die Trockensubstanz bezogen, nicht überschreitet und die Temperatur stufenweise auf 500 bis mindestens 750 °C steigt,
- die glühende (durch die fortschreitende Reaktolyse bereits stark verminderte) Koksmasse schnell durch eine Engstelle des Reaktors geführt wird, aber die darunter liegende (Zone d) langsam durchläuft, wobei die Temperatur des Glutbettes oberhalb der Engstelle 900 ° nicht überschreitet, unterhalb der Engstelle in einer Nachreaktionszone aber rasch auf Werte zwischen 700 und 300 °C fällt,
- das gebildete Rohgas am unteren Teil des Reaktionsraumes bei Temperaturen zwischen 300 und 400 °C austritt, aus dem Reaktor abgesaugt und auf an sich bekannte Weise gereinigt wird,
- während die ausreagierte Biomasse am untersten Teil des Reaktors über einen Rost als warme Asche unter Vermeidung von Lufteintritt aus dem Reaktionsraum ausgeschleust wird.

Vorzugsweise besteht der anorganische Mischkatalysator aus Verbindungen der ersten beiden Hauptgruppen des Periodensystems und der 8. Nebengruppe, wobei er zweckmäßig mit so viel Wasser angemaischt wird, dass auf 10 kg der Biomasse, bezogen auf deren Trockenmasse, 300 bis 1500 g Wasser genommen werden, und dass die überstehende Suspension in die Biomasse eingetragen und der Rest der Katalyatormischung erst nach mindestens 15minütiger Einwirkung eingearbeitet wird.

Vorzugsweise wird die dotierte Biomasse in Zone a (Trocknungszone) des Reaktors durch Zufuhr von überhitztem Wasserdampf auf 105 bis 150 °C aufgeheizt und dabei auf einen Wasserdampfdruck eingestellt, der den Umgebungsluftdruck um 1 bis 20 mbar übersteigt.

Vorteilhaft ist es, wenn die dotierte aufgeheizte Biomasse in der unter a liegenden Zone b (Thermolysezone) mit Heißdampf auf eine Temperatur von 270 bis 290 °C aufgeheizt wird, wobei der Heißdampf mit einem Druck eingedüst wird, der 5 bis 20 mbar über dem in Zone a angewandten beträgt.

Zweckmäßig sollte die in den oberen Bereich der Zone c (Reaktolysezone) eingedüste Heißluft einen Druck haben, der zwischen den in Zone a und Zone b eingesetzten liegt, wobei die angewandte Luftmenge zwischen 0,05 und 0,2 kg Luft pro kg Biomasse, auf die Trockensubstanz bezogen, liegt.

Vorteilhaft ist es, wenn durch Variation der Drücke in den Zonen b und c die Temperaturen im Grenzbereich zwischen den Zonen b und c zwischen 350 ° und 550 °C liegen.

Eine vorteilhafte Verfahrensweise besteht darin, dass im Mittelbereich der Zone c über weitere Heißluftdüsen 0,2 bis 0,5 kg sehr heiße Luft von 450 bis 500 °C pro kg Biomasse mit einem Druck zudosiert wird, der 2 bis 10 mbar unter dem im darüber liegenden Bereich der Zone c liegt.

Zweckmäßig ist es, wenn das gebildete Rohgas mit einer maximalen Temperatur von 800°C in die Zone d (Nachreaktionszone) gelangt und in dieser unter stufenweiser Abkühlung bis minimal 300 °C über ein Rostsystem in Kontakt mit heißer Asche bis zum unteren Ende der Zone d geleitet, dort in Rohgasschächte austritt und mit Unterdruck aus dem Reaktor abgesaugt wird.

Vorzugsweise sollten die Temperaturen beim Eintritt in die Zone d zwischen 700 ° bis 750 °C liegen und die stufenweise Abkühlung auf 350 ° bis 400 °C erfolgen.

Dabei sollte der Unterdruck so eingestellt werden, dass der Gasinnendruck im Reaktor in der Nähe der Verengung unter den Umgebungsluftdruck fällt, und die Maximaltemperatur der Reaktolyse von 900 °C, vorzugsweise 850 ° bis 890 °C, oberhalb der Verengung erreicht wird, wobei die Druckdifferenz in Zone d gegenüber dem Umgebungsluftdruck 5 bis 15 mbar beträgt.

Zusammenfassend lassen sich die vorzugsweisen Beziehungen der Drücke zueinander wie folgt darstellen:

| | | | jeweilige Differenz |
|---|---|---|---|
| Umgebungsluftdruck | p₀ | | |
| Druck im oberen Teil der Zone a | p₁ | p₁ > p₀ | 1 bis 20 mbar |
| Druck in der Zone b | p₂ | p₂ > p₁ | 5 bis 20 mbar |
| Druck im oberen Bereich der Zone c | p₃ | p₁ < p₃ < p₂ | |
| Druck im Mittelbereich der Zone c | p₄ | p₄ < p₃ | 2 bis 10 mbar |
| Druck unterhalb Verengungsbereich | p₅ | p₀ > p₅ | 5 bis 15 mbar |

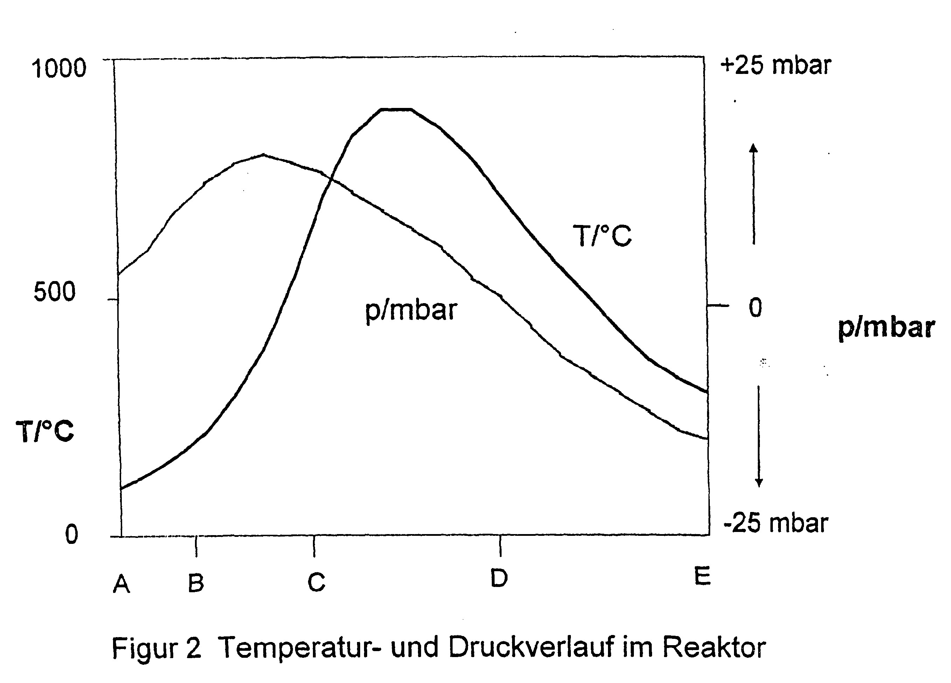

Schematisch wird dies in Fig. 2 dargestellt.

Unerwartet wurde gefunden, dass es gelingt, den Anteil an niederen Kohlenwasserstoffen entgegen der Lehrmeinung ohne gleichzeitige Teerbildung durch Absenkung der Luftüberschusszahl λ auf Werte λ < 0,1 entscheidend zu erhöhen. Dadurch wird ein Heizwert H_{U} > 10 MJ/Nm³ erreicht, gleichzeitig der Wasserstoffgehalt auf unter 20 Vol.-% gesenkt bei Erhöhung des Gehaltes an einfachen Kohlenwasserstoffen, insbesondere Methan, auf über 15 Vol.-%, und die Methanzahl deutlich erhöht. Das Erreichen einer möglichst niedrigen Luftzahl λ ist schon deshalb wünschenswert, weil damit automatisch eine Verringerung des Stickstoffs im Brenngas verbunden ist, der nur ein Verdünnungsmittel darstellt.

Eine Absenkung der Luftüberschusszahl λ (auch "equivalence ratio", "Äquivalenzverhältnis" genannt) unter einen Wert von 0,2 bis 0,3 ist aber mit den Vergasungs-verfahren nach dem Stand der Technik bisher nicht erreicht worden. Es wird in der Fachwelt davon ausgegangen, dass bei λ-Werten unter 0,18 nur noch eine pyrolytische Umwandlung der Biomasse stattfindet (vgl. M. Spitz, Kraftgas aus Holz zur alternativend Verwendung in Zündstrahl-Dieselmotoren, Holzgaserzeugung, Gasaufbereitung, chemische und physikalische Kraftstoffeigenschaften, Erdgassubstitution, Emissions- und Betriebsverhalten, S. 18, Shaker Verlag, Aachen 1999), also die Oxidationskraft des in der Luft enthaltenen Sauerstoffs zur Erreichung der erforderlichen hohen Temperaturen für eine effektive Reaktionsführung nicht ausreicht. Eine Vergasung nach dem Stand der Technik erfordert zur Durchführung der endothermen Vergasungsreaktionen eine Energiezufuhr bei hohen Temperaturen über 1200 °C, die nur durch Oxidation von C-haltigem Material erreicht werden kann, wozu Luftzahlen von 0,3 bis 0,4 und darüber angewandt wurden. Dies bedeutet, dass ein beträchtlicher Teil der chemischen Energie der zu vergasenden Biomasse aufgewendet werden muss, um das Vergasungsgut so hoch aufzuheizen, wodurch der Vergasungswirkungsgrad aber wesentlich gesenkt wird.

Da bei der pyrolytischen Zersetzung der Biomasse auch Flüssigprodukte (_{"}Teere") entstehen, die unerwünscht sind, werden die hohen Vergasungstemperaturen auch gefordert, um diese höhermolekularen Produkte in einfache Gase zu spalten.

Überraschend wurde gefunden, dass es in Verbindung mit dem katalytisch-partiell-allothermen Vergasungsprinzip gelingt, durch die erfindungsgemäße und stufenweise Kopplung von thermolytischen, reaktolytischen, oxidativen und reduktiven Verfahrensschritten eine niedrige Luftzahl zu realisieren und bei hoher Umsetzungsrate, insgesamt relativ niedrigen Reaktionstemperaturen und Kaltgaswirkungsgraden über 90 % ein teerarmes, heizwertreiches und klopffestes Gas mit hohem Methangehalt zu erzeugen.

Die Vorrichtung zur Erzeugung eines Brenngases aus Biomassen, insbesondere aus Holz, zur katalytisch-partiell-allothermen Festbettvergasung von Biomassen mit

Wasserdampf und Luft besteht in Form eines außen zylindrischen modifizierten Gleichstromvergasers (1) für absteigende Vergasung mit der Höhe h, mit Materialeintragschleuse (2) oberhalb des eigentlichen Reaktors und Aschesammler mit Ascheaustritt (13) unterhalb des eigentlichen Reaktors und ist erfindungsgemäß dadurch gekennzeichnet, dass der Vergasungsreaktor aus 4 Zonen (a, b, c, d) besteht und folgende - von oben nach unten vorhandene - Merkmale aufweist
- Dampfaustrittsdüsen (3) im obersten Teil der Zone a,
- Dampfeintrittsdüsen (4) in der Mitte der Zone a,
- Heißdampfdüsen (5) im oberen Teil von Zone b,
- Luftdüsen (6) im oberen Teil von Zone c,
- Heißluftdüsen (7) im mittleren Teil Zone c,
- einer Reaktorverengung (8) zwischen Zone c und d,
- dem Rohgasaustrittsring (9) im obersten Teil der Zone d,
- einem Rostsystem (10) als Innenteil der Zone d,
- Rohgasaustrittsschächten (11) in Form einer zylindrischen Umhüllung der Zone d,
- Abwärmenutzungssystemen (12) zwischen der Zone d und den Rohgasschächten (11),
wobei sich der zylindrische Querschnitt in der Zone a und d - von oben nach unten - kegelstumpfartig erweitert, und der Querschnitt in den Zonen b und c - von oben nach unten - kegelstumpfartig verjüngt.

Dabei ist der Reaktor mit den Außenradien und den Innenradien vertikal in 4 Zonen gegliedert, wobei sich die Zone a über die Höhe (Länge) hₐ, Zone b über h_{b}, Zone c über h_{c} und die Zone d über h_{d} erstreckt, d. h. die Gesamthöhe h ist die Summe von hₐ + h_{b} + h_{c} + h_{d}.

Die Höhen der Reaktionszonen a bis d haben zweckmäßig folgende Werte:
- Zone a (Trocknungszone), hₐ = 0,10 h bis 0,20 h,
- Zone b (Thermolysezone), h_{b} = 0,15 h bis 0,25 h,
- Zone c (Reaktolysezone), h_{c} = 0,25 h bis 0,35 h,
- Zone d (Nachreaktionszone), h_{d} = 0,30 h bis 0,40 h.

Der Reaktor 1 besteht in seiner äußeren Gestalt aus zwei koaxial übereinander gesetzten Zylindern, wobei der obere Zylinder in seiner vertikalen Ausrichtung die Zonen a bis c umfasst und der untere die Zone d, wobei der äußere Radius des unteren Zylinders größer ist als der Radius des oberen Zylinders und die innere Auskleidung die Form dreier koaxial übereinander gestellter Kreiskegelstümpfe besitzt.

Bezeichnet man die inneren Radien an den Stellen A, B, C, D, E des Reaktors, mit R_{A} ..... R_{E}, dann ist vorzugsweise R_{B} > R_{A}, R_{D} < R_{E} ≤ R_{C} mit R_{D} als engster Stelle der Innenauskleidung des Reaktors.

Vorzugsweise sollte der innere Radius R_{D} des zylinderförmigen Reaktors an der Verengung 8 das 0,3- bis 0,5-fache, vorzugsweise 0,35-fache, des maximalen Innenradius R_{B} beträgt und R_{E} das 0,8- bis 0,9-fache von R_{B} sein.

In der Zone d ist zweckmäßig ein Einbau aus übereinander versetzt angeordneten Metallstreifen aus hochwarmfestem Stahl montiert, wobei die Schlitze zwischen den Streifen so bemessen sind, dass die heißen Vergasungsrückstände von Streifen zu Streifen nachrutschen können, sich aber auf den Streifen ständig eine Schüttung heißer Asche befindet.

Eine zweckmäßige Ausgestaltung besteht darin, dass das Rostsystem in Zone d als Drehrost mit geschlitzten Böden und einer drehbaren Welle mit Schaufeln ausgebildet ist.

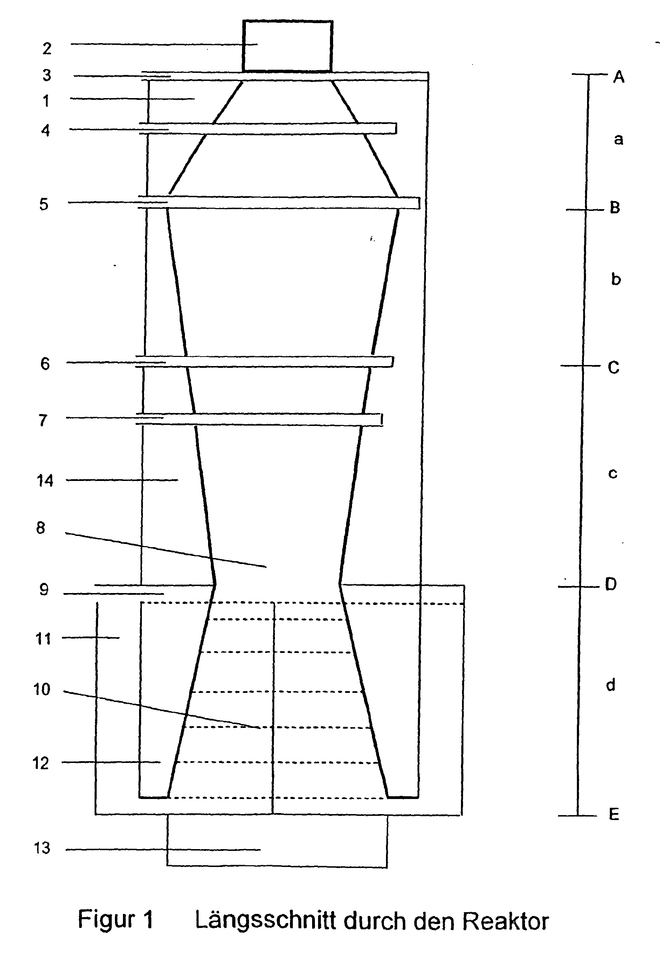

In Figur 1 ist eine bevorzugte Ausgestaltungsform der erfindungsgemäßen Vorrichtung als Längsschnitt schematisch dargestellt. Darin bedeuten:
1 - Vergasungsreaktor insgesamt
2 - Materialeintragsschleuse
3 - Dampfaustrittsdüsenring
4 - Dampfeintrittsdüsenring
5 - Heißdampfdüsenring
6 - Luftdüsenring
7 - Heißluftdüsenring
8 - Verengungsstelle
9 - Rohgasaustrittsring
10 - Einbau in Zone d
11 - Rohgasschacht
12 - Dampf/Lufterhitzungssystem
13 - Ascheaustrag
14 - Isolierungssystem

Zur besseren Veranschaulichung der wesentlichen Merkmale des Vergasers 1 mit der Gesamthöhe h ist dieser in der Figur 1 in vier Zonen a bis d eingeteilt.

Durch die Eingabeschleuse (2), die an der Stelle A des Reaktors, also an dessen oberen Ende, angeordnet ist, gelangt die mit dem Katalysator dotierte mechanisch vorbehandelte Biomasse in den Reaktor. Hier befindet sich der Dampfaustrittsring (3), aus dem Abdampf mit einem nur geringfügig über dem Außendruck p₀ liegenden Druck p₀+dp und einer etwas über 100 °C liegenden Temperatur austritt. In der Mitte der Zone a (Trocknungszone) liegt der obere Dampfeintrittsdüsenring (4), durch den Dampf mit dem Überdruck p₁ > p₀ und einer Temperatur von ca. 200 °C in die

zerkleinerte Biomasse eingedüst wird, die sich dadurch auf etwas über 100 °C erwärmt und dabei getrocknet wird. Am unteren Ende der Zone a an der Stelle B wird über den unteren Heißdampfdüseneintrittsring (5) sehr heißer Dampf mit dem Überdruck p₂ > p₁ und einer Temperatur von 300 bis 400 °C, vorzugsweise 350 °C, in den Reaktor eingedrückt.

Der Heißdampf erwärmt die Biomasse über dem Ring 5 auf mindestens 200 °C und die darunter in der Zone b (Thermolysezone) liegende auf 300 °C, wobei unter starkem Masseverlust ein aktiver Koks entsteht. An der Stelle C im unteren Teil der Zone b wird mittels des Luftdüsenrings (6) mit dem Überdruck p₃ < p₂ heiße Luft von etwa 350 °C in den Reaktor eingedüst.

Der durch diese Behandlung weiter aktivierte Koks tritt damit in die Reaktolysezone c ein und erwärmt sich auf über 500 °C. Im oberen Bereich der Zone c befindet sich der Heißluftdüsenring (7), durch den sehr heiße Luft von 450 bis 500 °C, vorzugsweise 480 °C mit dem Überdruck p₄ < p₃ in den Reaktor eingedüst wird. Durch die fortgesetzte oxidative Reaktolyse erhitzt sich die Aktivkoksmasse unter weiterem Masseverlust und Volumenschrumpfung auf maximal 900 °C.

Durch die ablaufenden endothermen Vergasungsreaktionen kühlt sich die Reaktionsmasse unter praktisch vollständigem Verbrauch des im Gas enthaltenen freien Sauerstoffs auf mindestens 800 °C bis 700 °C ab und tritt durch die Verengung (8) an die Stelle D in die Nachreaktionszone d über. Ebenfalls in der Höhe der Stelle D befindet sich der Rohgasaustrittsring (9), durch den das Rohgas den Reaktor verläßt. In der Nähe der Verengung (8) erreicht der Gasdruck im Reaktor wieder den Normaldruck p₀. Der Zwischenraum zwischen den als umgekehrt liegender Kreiskegelstumpf ausgestalteten Zonen b und c des inneren Reaktors und dem äußeren zylindrischen Reaktormantel ist mit wärmedämmendem Isoliermaterial ausgefüllt.

Figur 2 zeigt schematisch den Druck- und Temperaturverlauf im Reaktor.

Über den Einbau (10) in der Zone d, der vorzugsweise als Drehrostsystem gestaltet ist, gelangt die heiße, noch mit kohlenstoffhaltigen Restanteilen versehene Asche stufenweise in den Ascheaustrag (13) unterhalb der Stelle E. In der Zone d laufen überwiegend exotherme Nachreaktionen des Rohgases an der heißen Asche ab, so dass sich diese trotz Kühlung durch das Dampf/Lufterhitzungssystem (12), das um den die Zone d bildenden Reaktorteil angeordnet ist, nur langsam auf minimal 300 °C abkühlt. Der Ascheaustrag ist so gestaltet, dass Luftzutritt zum Drehrostsystem vermieden wird. An dem unteren Ende der Zone d tritt das heiße Rohgas in den Schacht (11), der zum Rohgasaustrittsring (9) führt, wo das Gas mit dem Unterdruck p₅ < p₀ abgesaugt wird.

Bei einer bevorzugten Variante des Einbaus 10 ist das Rostsystem in Zone d als Drehrost mit geschlitzten Böden und einer drucklosen Welle mit Schaufeln ausgebildet. Durch die metallisch ausgeführten Drehrostböden der bevorzugten Variante des Einbaus (10) wird die Wärme über die Innenwände der Nachreaktionszone d an das Wärmenutzungssystem (12) übertragen, in dem Metallrohre die Wärme auf Dampf bzw. Luft übertragen. Von hier werden die heißen Medien zu den Düsenringen (5) bis (7) geführt.

Es ist ein besonderer Vorteil der Erfindung, dass die Vergasung nach dem vorgeschlagenen Verfahren einstufig im geraden Durchgang erfolgt und auf diese Weise mit hoher Energieeffektivität und einem Minimum an dem Vergasungsmittel Luft ein sauberes heizwertreiches Gas erzeugt wird, das nur noch sehr wenig des Verdünnungsmittels Stickstoff enthält, hingegen ein gut abgestimmtes Verhältnis Methan zu Wasserstoff aufweist und deshalb sehr gute motorische Eigenschaften besitzt.

Die Erfindung wird in den nachfolgenden Beispielen näher beschrieben, ohne auf diese beschränkt zu sein.

### Beispiel 1

Aus Holzspänen hergestellte Presslinge in Form von 4 cm starken Pellets wurden mit einer Slurry aus dem anorganischen Anteil eines Ablaufs dotiert, dessen Eindampfrückstand auf die Oxide umgerechnet und normiert (in Masse-%) 55 Na₂O, 12 K₂O, 20 CaO, 3 Mgo, 5 Fe₂O₃ (Rest Al₂O₃; SiO₂, TiO₂ Spuren Schwermetalle wie Ni, Mn, Zn, Cu, Pb, Cr) enthielt. Dabei wurden zunächst 3 1 der überstehenden Lösung auf 100 kg der Pellets aufgesprüht und nach 30 Min. die restliche Mixtur zugemischt. Die Zusätze machten, auf die Trockensubstanzen bezogen, 2,1 Masse-% aus.

Die vorgewärmten dotierten Pellets wurden in Mengen von 50 kg/h, auf die Trockensubstanz bezogen, über die Materialeintragsschleuse (2) in einen Reaktor entsprechend Fig. 1 eingetragen.

Über die Dampfeintragsdüsen (4) wurden 15 kg/h Dampf von 200 °C mit einem Druck von p₁ = 1030 mbar bei einem Außendruck von p₀ = 1010 mbar zugegeben. Über den Dampfaustrittsring (3) trat der auf 105 °C abgekühlte Dampf mit 1015 mbar Druck wieder aus und wurde nach einer Zwischenbehandlung zurückgeführt. Über die Heißdampfdüsen (5) wurde mit einem Druck von p₂ = 1050 mbar 380 °C heißer Dampf eingedüst und dadurch die Biomasse auf über 200 °C erwärmt.

Durch die Luftdüsen (6) wurden 5 kg/h Luft von 360 °C mit p₃ = 1040 mbar in den Reaktor eingedüst und dadurch die Reaktolyse eingeleitet. Die Temperatur stieg auf ca. 550 °C in der Mitte des Reaktors.

Durch die Heißluftdüsen (7) wurden weitere 20 kg/h 530 °C heißer Luft mit einem Druck von p₄ = 1025 mbar zugegeben. Die Reaktorinnentemperatur stieg auf 890 °C an, fiel in der Nähe der Verengungsstelle (8) auf etwas unter 800 °C ab und verringerte sich weiter bis auf 400 °C kurz oberhalb des Ascheaustritts (13).

Am Gasaustritt (9) wurden bei einem Druck von 995 mbar 64 Nm³/h 310 °C heißes Rohgas abgesaugt, korrigiert auf den Wasserdampfgehalt (trocken) und auf Normbedingungen bezogen.

Es war nach Reinigung und Trocknung voll motorfähig und hatte eine Zusammensetzung (in Vol.-%) von 12,6 H₂, 8,4 CO, 24,6 CH₄, 1,8 C₂-C₇, 0,6 leichte Aromaten, 31,7 CO₂, 20,3 N₂, woraus sich ein Heizwert von Hᵤ = 13,4 MJ/Nm³ errechnet.

### Beispiel 2

Lufttrockene Altholzschnitzel mit einer mittleren Länge von 4 cm wurden in einem Trommelmischer mit einer Slurry aus konzentrierter Sodalösung und einem minera-lischen Schlamm beaufschlagt, in dem zunächst 5 l der überstehenden Lösung auf 100 kg aufgesprüht und nach 1stündiger Einwirkung der Restschlamm zugesetzt wurde. Das so behandelte feuchte Holz wies einen Gehalt an den erfindungsmäßig relevanten Stoffen von 0,7 Masse-% Na₂O, 0,2 Masse-% K₂O, 0,4 Masse-% CaO, 0,1 Masse-% MgO und 0,3 Masse-% Fe₂O₃ auf, bezogen auf die Trockenmasse und auf die Metalloxide umgerechnet, sowie Spuren von Ni und Co.

Dieses Material wurde vorgewärmt in einer Menge von 50 kg/h über die Materialein-gabeschleuse (2) in den Reaktor nach Fig. 1 eingegeben.

Über die Dampfeintragsdüsen (4) wurden 25 kg(h Dampf von 210 °C mit einem Druck von p₁ = 1015 mbar bei einem Außendruck von p₀ = 1000 mbar zugegeben. Über den Dampfaustrittsring (3) trat der auf 105 °C abgekühlte Dampf mit 1005 mbar Druck wieder aus und wurde nach einer Zwischenbehandlung zurückgeführt.

Über die Heißdampfdüsen (5) wurde mit einem Druck von p₂ = 1030 mbar 360 °C heißer Dampf eingedüst und dadurch die Biomasse auf über 200 °C erwärmt.

Durch die Luftdüsen (6) wurden 3 kg/h Luft von 350 °C mit p₃ = 1015 mbar in den Reaktor eingedüst und dadurch die Reaktolyse eingeleitet. Die Temperatur stieg auf etwas über 500 °C in der Mitte des Reaktors.

Durch die Heißluftdüsen (7) wurden weitere 15 kg/h 510 °C heißer Luft mit einem Druck von p₄ = 1010 mbar zugegeben. Die Reaktorinnentemperatur stieg auf 880 °C an, fiel in der Nähe der Verengungsstelle (8) auf etwas unter 800 °C ab und verringerte sich weiter bis auf 350 °C kurz oberhalb des Ascheaustritts (13) .

Am Gasaustritt (9) wurden mit einem Druck von 990 mbar 68 Nm³/h 300 °C heißes Rohgas abgesaugt, korrigiert auf den Wasserdampfgehalt (trocken) und auf Norm-bedingungen bezogen.

Es war nach Reinigung und Trocknung voll motorfähig und hatte eine Zusammensetzung (in Vol.-%) von 17,9 H₂, 10,4 CO, 22,0 CH₄, 1,7 C₂-C₇, 0,6 leichte Aromaten, 30,0 CO₂, 17,3 N₂, woraus sich ein Heizwert von Hᵤ = 13,0 MJ/Nm³ errechnet.

## Patentansprüche

1. Verfahren zur Erzeugung eines Brenngases aus Biomassen, insbesondere aus Holz, in einem Festbettvergasungsreaktor mit Wasserdampf und Luft als Vergasungsmittel unter Einsatz von anorganischen Mischkatalysatoren, wobei die so dotierte Biomasse erhitzt, getrocknet, mit Heißdampf und heißer Luft aufgeheizt, vergast und nach teilweiser Abkühlung der Rohgasstrom abgenommen und zum motorfähigen Brenngas gereinigt wird, **dadurch gekennzeichnet, dass**
- die Biomasse sukzessive mit multifunktionalen Mischkatalysatoren dotiert und nach Eingabe in den oberen Teil des Reaktors (Zone a) zunächst mit Heißdampf auf 100 bis 200 °C aufgeheizt, entlüftet und getrocknet wird, - die Biomasse durch Eindüsen von Heißdampf in den oberen Teil des darunter gelegenen Reaktors (Zone b) inert auf 300 bis höchstens 400 °C aufgeheizt wird,
- die verkokte Biomasse im mittleren Teil des Reaktors (Zone c) in mindestens zwei Teilmengen so mit Heißluft beaufschlagt wird, dass die Luftmenge insge-samt 0,7 kg Luft pro kg Biomasse, auf die Trockensubstanz bezogen, nicht überschreitet und die Temperatur stufenweise auf 500 bis mindestens 750 °C steigt,
- die glühende, durch die fortschreitende Reaktolyse bereits stark verminderte, Koksmasse schnell durch eine Engstelle des Reaktors geführt wird, aber die darunter liegenden (Zone d) langsam durchläuft, wobei die Temperatur des Glutbettes oberhalb der Engstelle 900 ° nicht überschreitet, unterhalb der Engstelle in einer Nachreaktionszone aber rasch auf Werte zwischen 700 und 300 °C fällt,
- das gebildete Rohgas am unteren Teil des Reaktionsraumes bei Temperaturen zwischen 300 und 400 °C austritt, aus dem Reaktor abgesaugt und auf an sich bekannte Weise gereinigt wird,
- während die ausreagierte Biomasse am untersten Teil des Reaktors über einen Rost als warme Asche unter Vermeidung von Lufteintritt aus dem Reaktionsraum ausgeschleust wird.

2. Verfahren nach Anspruch 1, **dadurch gekennzeichnet, dass** der anorganische Mischkatalysator aus Verbindungen der ersten beiden Haupt-gruppen des Periodensystems und der 8. Nebengruppe mit so viel Wasser angemaischt wird, dass auf 10 kg der Biomasse, bezogen auf deren Trockenmasse, 300 bis 1500 g Wasser genommen werden, und dass die überstehende Suspension unter Rühren in die Biomasse eingetragen und der Rest der Katalysatormischung erst nach mindestens 15minütiger Einwirkung eingearbeitet wird.

3. Verfahren nach Anspruch 1 und 2, **dadurch gekennzeichnet, dass** die dotierte Biomasse in Zone a (Trocknungszone) des Reaktors durch Zufuhr von über-hitztem Wasserdampf auf 105 bis 150 °C aufgeheizt und dabei ein Wasser-dampfdruck eingestellt wird, der den Umgebungsluftdruck um 1 bis 20 mbar übersteigt.

4. Verfahren nach einem oder mehreren der Ansprüche 1 bis 3, **dadurch gekennzeichnet, dass** die dotierte aufgeheizte Biomasse in der unter a liegenden Zone b (Thermolysezone) mit Heißdampf auf eine Temperatur von 270 bis 290 °C aufgeheizt wird, wobei der Heißdampf mit einem Druck eingedüst wird, der 5 bis 20 mbar über dem in Zone a angewandten beträgt.

5. Verfahren nach einem oder mehreren der Ansprüche 1 bis 4, **dadurch gekennzeichnet, dass** in den oberen Bereich der Zone c (Reaktolysezone) Heißluft mit einem Druck eingedüst wird, der zwischen den in Zone a und Zone b eingesetzten liegt, wobei die angewandte Luftmenge zwischen 0,05 und 0,2 kg Luft pro kg Biomasse, auf die Trockensubstanz bezogen, liegt.

6. Verfahren nach einem oder mehreren der Ansprüche 1 bis 5, **dadurch gekennzeichnet, dass** im Mittelbereich der Zone c über weitere Heißluftdüsen 0,2 bis 0,5 kg sehr heiße Luft von 450 bis 500 °C pro kg Biomasse mit einem Druck zudosiert wird, der 2 bis 10 mbar unter dem im darüber liegenden Bereich der Zone c liegt.

7. Verfahren nach einem oder mehreren der Ansprüche 1 bis 6, **dadurch gekennzeichnet, dass** das gebildete Rohgas mit einer maximalen Temperatur von 800 °C in die Zone d (Nachreaktionszone) gelangt und in dieser unter stufenweiser Abkühlung bis minimal 300 °C über ein Rostsystem in Kontakt mit heißer Asche bis zum unteren Ende der Zone d geleitet, dort in Rohgasschächte austritt und mit Unterdruck aus dem Reaktor abgesaugt wird.

8. Verfahren nach Anspruch 7, **dadurch gekennzeichnet, dass** der Unterdruck so eingestellt wird, dass der Gasinnendruck im Reaktor in der Nähe der Verengung unter den Umgebungsluftdruck fällt und die Maximaltemperatur der Reaktolyse von 900 °C, vorzugsweise 850 bis 890 °C, oberhalb der Verengung erreicht wird, wobei die Druckdifferenz in Zone d gegenüber dem Umgebungsluftdruck 5 bis 15 mbar beträgt.

9. Vorrichtung zur Erzeugung eines Brenngases aus Biomassen, insbesondere aus Holz, zur katalytischpartiellallothermen Festbettvergasung von Biomassen mit Wasserdampf und Luft in Form eines außen zylindrischen modifizierten Gleichstromvergasers (1) für absteigende Vergasung mit der Höhe h, mit Materialeintragschleuse (2) oberhalb des eigentlichen Reaktors und Aschesammler mit Ascheaustritt (13) unterhalb des eigentlichen Reaktors, **dadurch gekennzeichnet, dass** der Vergasungsreaktor aus 4 Zonen (a, b, c, d) besteht und folgende - von oben nach unten vorhandene - Merkmale aufweist
- Dampfaustrittsdüsen (3) im obersten Teil der Zone a,
- Dampfeintrittsdüsen (4) in der Mitte der Zone a,
- Heißdampfdüsen (5) im oberen Teil von Zone b,
- Luftdüsen (6) im oberen Teil von Zone c,
- Heißluftdüsen (7) im mittleren Teil Zone c,
- einer Reaktorverengung (8) zwischen Zone c und d,
- dem Rohgasaustrittsring (9) im obersten Teil der Zone d,
- einem Rostsystem (10) als Innenteil der Zone d,
- Rohgasaustrittsschächten (11) in Form einer zylindrischen Umhüllung der Zone d,
- Abwärmenutzungssystemen (12) zwischen der Zone d und den Rohgas-schächten (11),
wobei sich der zylindrische Querschnitt in der Zone a und d - von oben nach unten - kegelstumpfartig erweitert, und der Querschnitt in den Zonen b und c
- von oben nach unten - kegelstumpfartig verjüngt.

10. Vorrichtung (Vergasungsreaktor) aus Biomassen nach Anspruch 9, **dadurch gekennzeichnet, dass** die Höhen der Reaktionszonen a bis d folgende Werte besitzen:
- Zone a (Trocknungszone), hₐ = 0,10 h bis 0,20 h,
- Zone b (Thermolysezone), h_{b} = 0,15 h bis 0,25 h,
- Zone c (Reaktolysezone), h_{c} = 0,25 h bis 0,35 h,
- Zone d (Nachreaktionszone), h_{d} = 0,30 h bis 0,40 h.

11. Vorrichtung (Vergasungsreaktor) nach Anspruch 9 und 10, **dadurch gekennzeichnet, dass** der Reaktor 1 in seiner äußeren Gestalt aus zwei koaxial übereinander gesetzten Zylindern besteht, wobei der obere Zylinder in seinervertikalen Ausrichtung die Zonen a bis c umfasst und der untere die Zone d, wobei der äußere Radius des unteren Zylinders größer ist als der Radius des oberen Zylinders und die innere Auskleidung die Form dreier koaxial übereinander gestellter Kreiskegelstümpfe besitzt.

12. Vorrichtung (Vergasungsreaktor) nach einem oder mehreren der Ansprüche 9 bis 11, **dadurch gekennzeichnet, dass** das Rostsystem in Zone d als Drehrost mit geschlitzten Böden und einer drehbaren Welle mit Schaufeln ausgebildet ist.

## Claims

1. A process for producing a fuel gas from biomass, in particular wood, in a fixed-bed gasification reactor with water steam and air as gasification agents using inorganic mixing catalysts, wherein the such doped biomass is heated, dried, heated up with hot steam and hot air, gasified and after partial cooling-down of the raw gas flow removed and purified so to obtain an engine-suitable fuel gas, **characterized by** that
- the biomass is successively doped with multifunctional mixing catalysts, and after feeding it into the upper part of the reactor (zone a), it is first heated up to 100 to 200 °C by hot steam, aerated and dried,
- the biomass is inertly heated up to 300 to at most 400 °C by injection of hot steam into the upper part of the reactor arranged underneath (zone b),
- the coked biomass is loaded in the middle part of the reactor (zone c) in at least two portions with hot air such that the overall amount of air does not exceed 0.7 kg air per kg biomass, referred to the dry substance, and the temperature increases stepwise to 500 to at least 750 °C,
- the glowing coke mass already substantially reduced by the progressing reactolysis is quickly conducted through a bottleneck of the reactor, however passes slowly the ones underneath (zone d), and the temperature of the glowing bed above the bottleneck does not exceed 900 °C, however drops quickly to values between 700 and 300 °C underneath the bottleneck in a secondary reaction zone,
- the generated raw gas exits at the lower part of the reaction space at temperatures between 300 and 400 °C, is sucked-off from the reactor and purified in a per se known manner,
- whereas the reacted biomass is guided out as warm ash at the lowermost part of the reactor over a grate under prevention of air ingress from the reaction space.

2. A process according to claim 1, **characterized by** that the inorganic mixing catalyst from compounds of the first two main groups of the periodic system and the 8^{th} side group is mashed with such an amount of water that per 10 kg biomass, referred to the dry mass thereof, 300 to 1,500 g water are taken, and that the supernatant suspension is introduced under stirring into the biomass, and the remainder of the catalyst mixture is added only after an exposure of at least 15 minutes.

3. A process according to claim 1 and 2, **characterized by** that the doped biomass in zone a (drying zone) of the reactor is heated up to 105 to 150 °C by supply of overheated water steam, and a water steam pressure is adjusted, which exceeds the ambient air pressure by 1 to 20 mbar.

4. A process according to one or several of claims 1 to 3, **characterized by** that the doped, heated-up biomass is heated up in the zone b (thermolysis zone) arranged under zone a to a temperature of 270 to 290 °C by hot steam, wherein the hot steam is injected at a pressure being 5 to 20 mbar above the pressure used in zone a.

5. A process according to one or several of claims 1 to 4, **characterized by** that into the upper section of zone c (reactolysis zone), hot air is injected at a pressure, which is between the pressures used in zone a and zone b, and the used amount of air is between 0.05 and 0.2 kg per kg biomass, referred to the dry substance.

6. A process according to one or several of claims 1 to 5, **characterized by** that in the middle section of zone c, 0.2 to 0.5 kg very hot air of 450 to 500 °C per kg biomass is fed through further hot-air nozzles at a pressure, which is 2 to 10 mbar below the pressure in the section of zone c arranged thereabove.

7. A process according to one or several of claims 1 to 6, **characterized by** that the generated raw gas arrives in zone d (secondary reaction zone) with a maximum temperature of 800 °C, and is conducted therein under stepwise cooling-down to minimum 300 °C over a grate system in contact with hot ash to the lower end of zone d, exits there into raw gas ducts and is sucked off from the reactor by underpressure.

8. A process according to claim 7, **characterized by** that the underpressure is adjusted such that the internal gas pressure in the reactor near the bottleneck drops below the ambient air pressure, and the maximum temperature of the reactolysis of 900 °C, preferably 850 to 890 °C, is obtained above the bottleneck, and the pressure difference in zone d compared to the ambient air pressure is 5 to 15 mbar.

9. A device for producing a fuel gas from biomass, in particular wood, for the catalytic- partially allothermal fixed-bed gasification of biomass with water steam and air in the form of an externally cylindrical modified cocurrent gasifier (1) for down-draft gasification having the height h, having a material feed port (2) above the actual reactor and an ash collector having an ash exit (13) underneath the actual reactor, **characterized by** that the gasification reactor comprises 4 zones (a, b, c, d) and has the following features - from top to bottom
- steam exit nozzles (3) in the uppermost part of zone a,
- steam entry nozzles (4) in the middle of zone a,
- hot-air nozzles (5) in the upper part of zone b,
- air nozzles (6) in the upper part of zone c,
- hot-air nozzles (7) in the middle part of zone c,
- a reactor bottleneck (8) between zones c and d,
- the raw gas exit ring (9) in the uppermost part of zone d,
- a grate system (10) as the internal part of zone d,
- raw gas exit ducts (11) in the form of a cylindrical envelope of zone d,
- waste heat utilization systems (12) between zone d and the raw gas ducts (11),
wherein the cylindrical cross section in zones a and d increases from top to bottom in a cone-type manner, and the cross section in zones b and c decreases from top to bottom in a cone-type manner.

10. A device (gasification reactor) for biomass according to claim 9, **characterized by** that the heights of the reaction zones a to d have the following sizes:
- zone a (drying zone), hₐ = 0.10 h to 0.20 h,
- zone b (thermolysis zone), h_{b} = 0.15 h to 0.25 h,
- zone c (reactolysis zone), h_{c} = 0.25 h to 0.35 h,
- zone d (secondary reaction zone), h_{d} = 0.30 h to 0.40 h.

11. A device (gasification reactor) according to claim 9 and 10, **characterized by** that the reactor 1 consists in its external appearance of two cylinders coaxially positioned one on the other, the upper cylinder comprising in its vertical extension zones a to c, and the lower cylinder comprising zone d, the external radius of the lower cylinder being larger than the radius of the upper cylinder, and the internal lining having the shape of three cylindrical cones coaxially positioned one on the other.

12. A device (gasification reactor) according to one or several of claims 9 to 11, **characterized by** that the grate system in zone d is adapted as a rotary grate having slotted bottoms and a rotary shaft with blades.

## Revendications

1. Procédé de production d'un gaz combustible à partir de biomasses, en particulier à partir de bois, dans un réacteur de gazéification à lit fixe avec de la vapeur d'eau et de l'air à titres d'agents de gazéification en utilisant des catalyseurs mixtes inorganiques, dans lequel la biomasse ainsi dopée est chauffée, séchée, réchauffée à la vapeur chaude et à l'air chaud, gazéifiée et, après refroidissement partiel, le flux de gaz brut est prélevé et purifié pour former un gaz combustible prêt à l'utilisation dans des moteurs, **caractérisé en ce que**
- la biomasse est dopée successivement avec des catalyseurs mixtes multifonctionnels et, après introduction dans la partie supérieure du réacteur (zone a), elle est chauffée tout d'abord à la vapeur chaude jusqu'à une température de 100 à 200°C, elle est mise à l'air et séchée, et la biomasse est chauffée par injection de vapeur chaude dans la partie supérieure du réacteur situé au-dessous (zone b) de façon inerte à une température de 300 à 400°C au maximum,
- la biomasse cokéfiée est sollicitée par de l'air chaud dans la partie médiane du réacteur (zone c) en au moins deux quantités partielles, de telle sorte que la quantité d'air ne dépasse au total pas 0,7 kg d'air par kg de biomasse, en relation avec la substance à sec, et que la température augmente par gradins à une température de 500 à 750°C au moins,
- la masse cokéfiée portée au rouge déjà fortement diminuée par la poursuite de la réactolyse est amenée rapidement à travers un goulot du réacteur, mais traverse lentement les zones situées au-dessous (zone d), la température du lit ardent au-dessus du goulot ne dépassant pas 900° mais tombant rapidement à des valeurs de 700 à 300°C au-dessous du goulot dans une zone de post-réaction,
- le gaz brut produit sort à la partie inférieure de la chambre de réaction à des températures de 300 à 400°C, est aspiré hors du réacteur et est purifié de manière connue en soi,
- tandis que la biomasse qui a fini de réagir est sortie sous forme de cendres chaudes hors de la chambre de réaction à la partie la plus basse du réacteur via une grille en évitant une entrée d'air.

2. Procédé selon la revendication 1, **caractérisé en ce que** le catalyseur mixte inorganique constitué de composés des deux premiers groupes principaux du système périodique et du 8ième sous-groupe est mouillée avec une quantité d'eau telle que sur 10 kg de la biomasse, en relation avec sa masse à sec, on absorbe 300 à 1500 g d'eau, et la suspension débordante est introduite avec agitation dans la biomasse, et le reste du mélange catalyseur est ajouté uniquement au bout d'un temps d'action de 15 minutes.

3. Procédé selon la revendication 1 et 2, **caractérisée en ce que** la biomasse dopée est chauffée à une température de 105 à 150°C dans la zone a (zone de séchage) du réacteur par apport de vapeur d'eau surchauffée, et on établit alors une pression de vapeur d'eau qui dépasse la pression d'air atmosphérique de 1 à 20 mbar.

4. Procédé selon l'une ou plusieurs revendications 1 à 3, **caractérisé en ce que** la biomasse dopée chauffée est chauffée à la vapeur chaude à une température de 270 à 290°C dans la zone b (zone de thermolyse) située au-dessous de la zone a, la vapeur chaude étant injectée à une pression supérieure de 5 à 20 mbar à celle appliquée dans la zone a.

5. Procédé selon l'une ou plusieurs des revendications 1 à 4, **caractérisé en ce que** de l'air chaud est injecté dans la région supérieure de la zone c (zone de réactolyse) à une pression située entre celle de la zone a et celle de la zone b, la quantité d'air appliquée étant de 0,05 à 0,2 kg d'air par kg de biomasse, en relation à la substance à sec.

6. Procédé selon l'une ou plusieurs des revendications 1 à 5, **caractérisé en ce que** dans la région médiane de la zone c, via d'autres buses à air chaud, on ajoute de façon dosée 0,2 à 0,5 kg d'air très chaud de 450 à 500°C par kg de biomasse à une pression qui est inférieure de 2 à 10 mbar à celle dans la région, située au-dessus, de la zone c.

7. Procédé selon l'une ou plusieurs revendications 1 à 6, **caractérisé en ce que** le gaz brut produit parvient à une température maximale de 800°C dans la zone d (zone de post-réaction) et est mené dans celle-ci jusqu'à l'extrémité inférieure de la zone d en venant en contact avec des cendres chaudes sous un refroidissement par gradins jusqu'à 300°C au minimum, via un système à grille, sort ici dans des puits à gaz brut et est aspiré sous dépression hors du réacteur.

8. Procédé selon la revendication 7, **caractérisé en ce que** la dépression est réglée de telle sorte que la pression intérieure de gaz dans le réacteur tombe au-dessous de la pression d'air atmosphérique à proximité du goulot et que la température maximale de la réactolyse de 900°C, de préférence de 850 à 890°C, est atteinte au-dessus du goulot, la différence de pression dans la zone d par rapport à la pression d'air atmosphérique étant de 5 à 15 mbar.

9. Dispositif pour produire un gaz combustible à partir de biomasses, en particulier à partir de bois, destiné à la gazéification catalytique-partiellement allothermique à lit fixe de biomasses à la vapeur d'eau et à l'air, sous la forme d'un gazéificateur (1) modifié, extérieurement cylindrique, et à courant parallèle pour la gazéification descendante de la hauteur h, comportant un sas d'introduction de matière (2) au-dessus du réacteur proprement dit et un collecteur de cendres pourvu d'une sortie de cendres (13) au-dessous du réacteur proprement dit, **caractérisé en ce que** le réacteur de gazéification est constitué par 4 zones (a, b, c, d) et comprend les éléments suivants, vus de haut en bas :
- des buses de sortie de vapeur (3) dans la partie la plus haute de la zone a,
- des buses d'entrée de vapeur (4) au milieu de la zone a,
- des buses à vapeur chaude (5) dans la partie supérieure de la zone b,
- des buses à air (6) dans la partie supérieure de la zone c,
- des buses à air chaud (7) dans la partie médiane de la zone c,
- un goulot de réacteur (8) entre la zone c et la zone d,
- l'anneau de sortie de gaz brut (9) dans la partie la plus haute de la zone d,
- un système à grille (10) comme partie intérieure de la zone d,
- des puits de sortie de gaz brut (11) sous la forme d'une enveloppe cylindrique de la zone d,
- des systèmes (12) d'exploitation de la chaleur évacuée entre la zone d et les puits à gaz brut (11), dans lequel la section transversale cylindrique dans la zone a et dans la zone d s'élargit en forme de tronc de cône de haut en bas, et la section transversale dans les zones b et c se rétrécit en forme de tronc de cône de haut en bas.

10. Dispositif de gazéification (réacteur de gazéification) à partir de biomasses selon la revendication 9, **caractérisé en ce que** les hauteurs des zones de réaction a à d présentent les valeurs suivantes :
- zone a (zone de séchage), hₐ = 0,10 h à 0,20 h,
- zone b (zone de thermolyse), h_{b} = 0,15 h à 0,25 h,
- zone c (zone de réactolyse), h_{c} = 0,25 h à 0,35 h,
- zone d (zone de post-réaction), h_{d} = 0,30 h à 0,40 h.

11. Dispositif de gazéification (réacteur de gazéification) selon la revendication 9 et 10, **caractérisé en ce qu'**à l'égard de sa conception extérieure, le réacteur (1) est constitué par deux cylindres posés coaxialement l'un sur l'autre, le cylindre supérieur comprenant dans son orientation verticale les zones a à c, et le cylindre inférieur comprenant la zone d, le rayon extérieur du cylindre inférieur étant supérieur au rayon du cylindre supérieur, et le revêtement intérieur présentant la forme de trois troncs de cône à base circulaire posés coaxialement les uns au-dessus des autres.

12. Dispositif de gazéification (réacteur de gazéification) selon l'une ou plusieurs des revendications 9 à 11, **caractérisé en ce que** le système à grille dans la zone d est réalisé sous la forme d'une grille rotative à fonds fendus et à arbre rotatif pourvu de pales.
